# EUROPÄISCHE PATENTSCHRIFT

(11) **EP 0 644 406 B1**
(45) Veröffentlichungstag und Bekanntmachung des Hinweises auf die Patenterteilung: **10.06.1998**
(21) Anmeldenummer: 94114884.3
(22) Anmeldetag: 21.09.1994
(51) Int. Cl.: G01G 11/08

(54) **Gravimetrische Schüttgutdosierung mit Messung ab einem Grenzdruck**
Gravimetric dosage of bulk materials with measurement only from a limit pressure
Dosage gravimétrique de produits en vrac avec mesurage seulement à partir d'une pression limite

(30) Priorität: 21.09.1993 DE 4332030
(43) Veröffentlichungstag der Anmeldung: 22.03.1995
(73) Patentinhaber: Pfister GmbH, 86165 Augsburg (DE)
(72) Erfinder: Häfner, Hans Wilhelm, D-86551 Aichach-Walchshofen (DE)
(74) Vertreter: Fiener, Josef

(56) Entgegenhaltungen:
- EP-A- 0 140 213
- CH-A- 658 724
- DE-A- 3 310 735
- DE-A- 3 413 757
- FR-A- 2 456 344

## Beschreibung

Die Erfindung betrifft ein Verfahren und eine Vorrichtung zum gravimetrischen Dosieren von Schüttgütern mit den oberbegrifflichen Merkmalen des Patentanspruches 1 bzw. 9.

Ein derartiges Verfahren und eine Vorrichtung zum Beschicken eines Behälters mit pulvrigen Gütern ist aus der DE 34 13 757 A1 bekannt. Hierbei mündet in einem Wägebehälter wenigstens ein Zuführungsrohr, durch das pulverförmiges Schüttgut aus einem oder mehreren Vorratsbehältern nacheinander gesaugt wird, dort additiv verwogen und nach Öffnen eines Bodenverschlusses einer Mischeinrichtung zugeführt wird. Derartige Gemengeanlagen zum Dosieren von Chargen pulvriger Güter werden beispielsweise in der keramischen Industrie oder bei der Putzherstellung verwendet, wobei mehrere Sorten unterschiedlicher Bindemittel, Füllstoffe, Farben, Zuschläge verwogen werden. Die Schüttgüter werden über Förderschnecken oder einen pneumatischen Förderstrom dem gemeinsamen Wägebehälter zugeführt. Bei derartigen Wägevorrichtungen, die in einem pneumatischen Förderstrom liegen, ist die Wiegegenauigkeit jedoch wesentlich von den Strömungsverhältnissen abhängig. So soll für eine ausreichende Wägegenauigkeit vermieden werden, daß im Förderstrom auftretende Druckstöße, z. B. aufgrund der Ventilbetätigungen sich auf die Waage auswirken. Häufig werden hierzu die ein- und ausmündenden Leitungen zum Beschicken und Austragen im Anschlußbereich horizontal verlaufend geführt, damit Druckänderungen keinen Einfluß auf die Wägezellen des Wägebehälters ausüben. Diese Maßnahmen reichen jedoch nicht aus, um einen Einfluß der Druckverhältnisse auf das Wägesignal auszuschließen, so daß bereits bei geringen Druckunterschieden, sei es Überdruck oder Unterdruck die Wägeergebnisse verfälscht werden können.

Aus der DE 33 10 735 A1 ist desweiteren ein Justierverfahren für einen Wägebehälter bekannt, wobei die Wirkung von Kraftnebenschlüssen auf das Auswägeergebnis dadurch minimiert werden soll, daß aus der scheinbaren Belastungs- bzw.

Gewichtsänderung des Wägebehälters in Abhängigkeit von der Temperatur oder dem Druck eine Korrekturgröße ermittelt wird, die dann dem Wägesignal durch Addition oder Subtraktion rechnerisch überlagert wird. Da hierbei direkt in das Wägesignal eingegriffen wird, und somit unzulässige Manipulationen und Eingriffe in das Wägesystem möglich sind, ist die Eichfähigkeit einer derartigen Gemengeanlage nicht gegeben, was auch für das Wägesystem gemäß der CH 658 724 gilt, da auch dort eine rechnerische Korrektur des ermittelten Wägesignals vorgenommen wird.

Demzufolge liegt der Erfindung die Aufgabe zugrunde, ein eichfähiges Verfahren zum gravimetrischen Dosieren von Schüttgütern und eine dementsprechende Vorrichtung anzugeben, wobei eine größere Manipulationssicherheit und damit Eichfähigkeit, sowie eine höhere Wägegenauigkeit erreicht wird.

Diese Aufgabe wird gelöst durch ein Verfahren mit den Merkmalen des Anspruches 1 bzw. durch eine Vorrichtung mit den Merkmalen des Anspruches 9.

Durch die Anordnung eines Drucksensors zur Messung des Druckes im Wägebehälter können die jeweils herrschenden Druckverhältnisse in dem Wägebehälter erfaßt werden, wobei erst bei Erreichen oder Unterschreiten eines bestimmten Grenzdruckwertes das Wägesignal der Wägezellen von der Wägeelektronik zur Registrierung übernommen wird. Hierdurch wird vermieden, daß eine Wägung bei zu hohem Unter- oder Überdruck erfolgt, die die Wägeergebnisse der geeichten Wägezelle und Wägeelektronik verfälschen könnten. Die Registrierung des Wägeergebnisses und Weiterschaltung des nächsten Dosierschrittes erfolgt solange nicht, bis der Druck im Wägebehälter mit dem Umgebungsdruck im wesentlichen übereinstimmt.

In vorteilhafter Ausführung wird das Drucksignal dazu verwendet, auch die Schüttgutzuführung zu steuern. Wenn beispielsweise im Wägebehälter Überdruck vorliegt, so kann das Dosierorgan, beispielsweise eine Zuführklappe nachlaufend geschlossen werden, da aufgrund des im Wägebehälter herrschenden Überdruckes, beispielsweise im Zeitpunkt der Umschaltung von der Grobstromauf die Feinstromdosierung, geringere Mengen des Schüttgutes nachfließen. Hierdurch wird eine genauere Dosierung ermöglicht, da der Dosiersteuerung eine Zusatzlast vorgegeben wird, die durch eine entsprechend längere Dosierphase berücksichtigt wird.

Weitere vorteilhafte Ausgestaltungen sind Gegenstand der abhängigen Ansprüche.

Nachfolgend werden zwei Ausführungsbeispiele anhand der Zeichnung näher erläutert und beschrieben. Hierbei zeigen:
- Fig. 1: eine Behälterwaage mit Zuführung einer Schüttgut-Komponente; und
- Fig. 2: eine Behälterwaage mit zwei Beschickungsorganen.

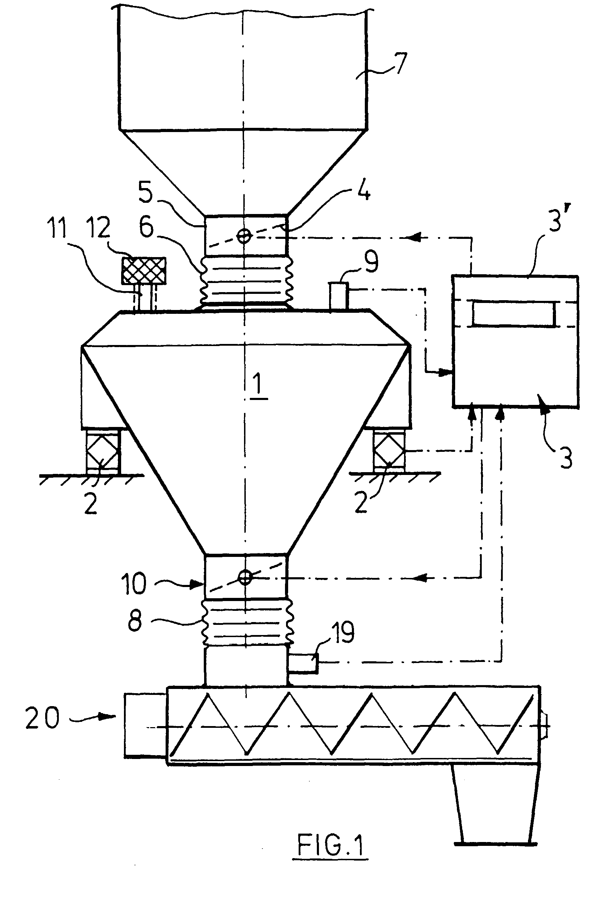

Fig. 1 zeigt schematisch ein erstes Ausführungsbeispiel einer Behälterwaage, wobei ein Wägebehälter 1 in nicht näher dargestellter Weise so gelagert ist, daß er sich über mehrere Wägezellen 2 abstützt. Der Ausgang der Wägezellen 2 ist mit einer Wägeelektronik 3 mit integrierter Dosiersteuerung 3' verbunden, die das Gewicht des Wägebehälters 1 in einem Steuerungsrechner registriert, verarbeitet und anzeigt. Diese Wägeelektronik 3 ist verplombt und vom Eichamt abgenommen, um Fehlanzeigen auszuschließen.

Die Dosiersteuerung 3' aktiviert ein Dosierorgan 4, das hier in Form einer Klappe in einem Zuführrohr 5 dargestellt ist. Das Dosierorgan 4 kann auch durch einen Schieber, eine Schnecke oder eine Vibrationsrinne oder dgl. gebildet sein. Das Zuführrohr 5 ist über eine flexible Verbindung 6, insbesondere einen Kompensator mit einem über dem Wägebehälter 1 vorgesehenen Vorratsbehälter (Silo) 7 verbunden. Unterhalb des Wägebehälters 1 ist eine Austragvorrichtung 10, Z. B. eine Entleerungsklappe, ein Absperrschieber oder eine Förderschnecke vorgesehen, die über einen Kompensator 8 zur Entkopplung von dem nachgiebig gelagerten Wägebehälter 1 an eine nicht näher beschriebene weiterverarbeitende Einrichtung, z. B. ein Reaktions- oder Mischgefäß 20 angeschlossen ist.

Es wird nun vorgeschlagen, an diesem Wägebehälter 1 einen Drucksensor 9 anzuordnen, um den im Wägebehälter 1 herrschenden Druck zu erfassen. Der Drucksensor 9 ist an die Wägeelektronik 3 angeschlossen, in der ein bestimmter, vom Eichamt ebenfalls kalibrierter Grenzdruckwert, z. B. durch Speicherung in einem EPROM festgelegt ist, beispielsweise der Atmosphärendruck mit den entsprechenden Plus- und Minustoleranzen je nach der geforderten Genauigkeit als Sollwert abgespeichert ist. Erst wenn der Drucksensor 9 einen Druck im Wägebehälter 1 erfaßt, der diesem Soll- oder Grenzdruckwert entspricht, wird von der Wägeelektronik 3 das Wägesignal von den Wägezellen 2 registriert, d. h. z. B. zum additiven Wägen gespeichert oder integriert. Erst dann wird der Dosiervorgang z. B. das Zudosieren einer weiteren Charge durch Aktivieren der Dosiersteuerung 3' ausgelöst.

Darüberhinaus kann ein weiterer Drucksensor 19 die Druckverhältnisse an der Austragvorrichtung 10 erfassen, insbesondere, wenn diese als Absaugvorrichtung ausgebildet ist. Die Drucksignale der Drucksensoren 9 und 19 werden hierbei in der Wägeelektronik 3 miteinander verglichen und verarbeitet. Da bei der Beschickung mit pulvrigen Schüttgütern, insbesondere bei hohen Volumenströmen, ein relativ hoher Druck in dem Wägebehälter 1 erreicht wird, ist es zweckmäßig, an dem Wägebehälter 1 wenigstens eine Entlüftung 11 zum schnelleren Druckabbau vorzusehen, damit der angestrebte Grenzdruckwert, insbesondere der vollständige Druckabbau auf Umgebungsdruck möglichst rasch erreicht wird, um somit das Wägespiel zu beschleunigen. Zur Entlüftung 11 wird ein Filter 12 verwendet, um das Austreten von Pulvermaterial zu vermeiden. Hierbei ist der Drucksensor 9 von weiterem Vorteil, da hierdurch ein Zusetzen des Filters 12 erfaßt werden kann, in dem der Druckabbau des Filters 12 mit der Druckabbaurate bei einem ungebrauchten Filter verglichen wird. Hierdurch können auch an das Bedienungspersonal Hinweise zum Austausch oder zur Reinigung des Filters 12 abgeleitet werden.

Bei der Ausführung der Austragvorrichtung 10 als pneumatische Absaugvorrichtung ist es ebenfalls sinnvoll, eine Entlüftung vorzusehen, damit auch in der Austragvorrichtung 10 der angestrebte Grenzdruckwert, im allgemeinen der Atmosphärendruck, so rasch wie möglich erreicht wird. Wenn dieser Grenzdruckwert erreicht ist, wird das Wägesignal von der Wägeelektronik 3 übernommen, da dann aufgrund der Druckverhältnisse in dem Wägebehälter 1 und der Austragvorrichtung 10 innerhalb der Eichgenauigkeit keine Verfälschungen des Wägeergebnisses mehr vorliegen.

Aufgrund der Druckmessung mit den Drucksensoren 9 bzw. 19 läßt sich auch die Schüttgutförderung, insbesondere bei der Umschaltung von Grobstrom- zur Feinstromförderung oder bei frequenzgesteuerten Antrieben des Dosierorgans 4 optimieren. Wenn beispielsweise im Wägebehälter 1 ein Überdruck herrscht, kann die Schüttgutzuführung über das Zuführrohr 5 durch verzögerte Abschaltung des Dosierorgans 4 in seiner Genauigkeit insgesamt verbessert werden, da gegen den Überdruck in dem Wägebehälter 1 effektiv weniger Material nachfließt als vorgesehen ist. Durch Verlängerung der Dosierphase des Dosierorgans 4 proportional zum vom Drucksensor 9 erfaßten Druck im Wägebehälter 1 läßt sich die Dosiergenauigkeit erhöhen.

Bei einem Unterdruck im Wägebehälter 1 gilt hierbei das umgekehrte Verhältnis. Ein Unterdruck im Wägebehälter 1 kann beispielsweise dann auftreten, wenn die Austragvorrichtung 10 als Absaugvorrichtung ausgebildet ist oder die gesamte Behälter-Wägevorrichtung als Subtraktionswaage ausgebildet ist.

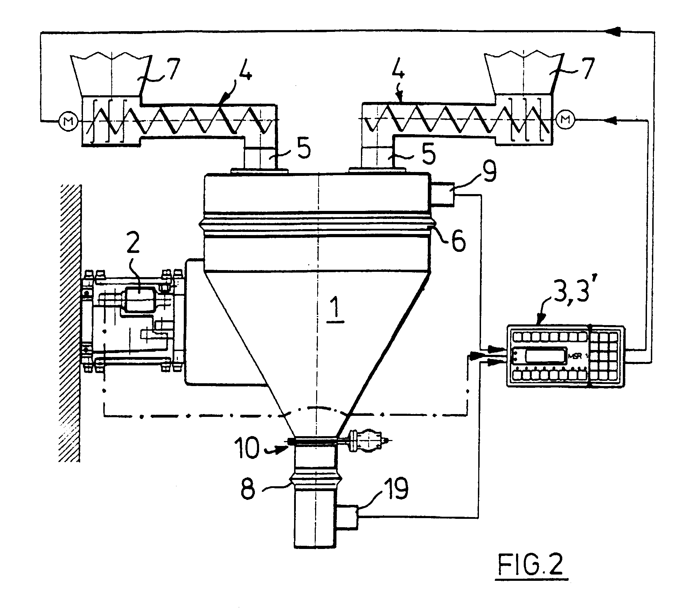

In Fig. 2 ist eine abgewandelte Ausführungsform der Behälterwaage dargestellt, wobei grundsätzlich die gleichen Bezugszeichen wie in Fig. 1 verwendet werden. Im Unterschied zu dieser ist hierbei der Wägebehälter 1 nicht über mehrere Wägezellen 2 abgestützt, sondern über eine, beispielsweise an einem Rahmen befestigte Lenker-Wägezelle 2. Die Wägesignale dieser einzigen Lenker-Wägezelle werden wiederum einer Wägeelektronik 3 mit einer integrierten Dosiersteuerung 3' zugeleitet. Diese Dosiersteuerung 3' regelt oder steuert hier zwei Dosierorgane 4, die über jeweils ein Zuführrohr 5 in den Behälter 1 einmünden. Durch die beiden Dosierorgane 4, die unterschiedliche Komponenten aus zwei oder mehr Vorratsbehältern 7 abziehen, ist somit das Auswägen mehrerer Schüttgut-Komponenten möglich.

Die beiden Zuführrohre 5 münden in einen Deckel des Wägebehälters 1, der unter diesem Deckel wiederum einen Kompensator 6, jedoch hier mit einem relativ großen Durchmesser aufweist. In Nähe des Kompensators 6 ist wiederum der Drucksensor 9 angeordnet, der seine Drucksignale an die Wägeelektronik 3 weitergibt. Entsprechendes gilt für den zweckmäßigerweise vorgesehenen Drucksensor 19, der in Nähe des unteren Kompensators 8 und der Austragvorrichtung 10 angeordnet ist, die hier schematisch als Schieber dargestellt ist. Durch die hier gezeigte Ausführung des oberen Kompensators 6 wird im Beschickungsbereich nur ein einziger Kompensator zur Entkoppelung des Wägebehälters 1 von den Zuführorganen benötigt, obwohl, wie angedeutet, eine Vielzahl von derartigen Dosierorganen 4 mit Zuführrohren 5 in den Wägebehälter 1 einmünden kann.

Auch hierbei wird wiederum das Wägesignal von der Wägezelle 2 erst dann in die Wägeelektronik 3 übertragen bzw. übernommen und registriert, wenn der Drucksensor 9 und ggfs. Drucksensor 19 den Grenzdruckwert, insbesondere Atmosphärendruck plus/minus üblicher Toleranzen feststellt bzw. der Wägeelektronik 3 gegenüber anzeigt.

Es sei darauf hingewiesen, daß durch diese selektive Auswahl von Wägesignalen lediglich bei Vorliegen unverfälschter Umgebungsbedingungen (d. h. keine zu hohen oder niedrigen Drücke im Wägebehälter) die Wägesignale der kalibrierten Wägezelle(-n) ohne rechnerischen Eingriff, wie Differenz- oder Produktbildung erfolgen kann. Hierdurch wird nicht nur die Auswertung beschleunigt, sondern auch ein exaktes, unverfälschtes Wägesignal erhalten. Somit erfüllt das vorgeschlagene Wägeverfahren die Eichvorschriften der Behörden, da jeglicher rechnerischer Eingriff in das Wägesignal selbst unterbleibt.

## Patentansprüche

1. Verfahren zum gravimetrischen Dosieren von Schüttgut, das aus einem Vorratsbehälter (7) einem Wägebehälter (1) zugeführt, dort unter Bestimmung eines Wägesignals zur Weiterleitung an eine Wägeelektronik (3) und Dosiersteuerung (3') gewogen und dann aus dem Wägebehälter (1) abgeleitet wird, wobei der Druck im Wägebehälter (1) gemessen wird,
dadurch gekennzeichnet, daß
erst bei Erreichen eines Grenzdruckwertes, insbesondere des Atmosphärendruckes das Wägesignal an die Wägeelektronik (3) weitergeleitert wird.

2. Verfahren nach Anspruch 1,
dadurch gekennzeichnet, daß
der Druck im Wägebehälter (1) kontinuierlich gemessen wird.

3. Verfahren nach Anspruch 1 oder 2,
dadurch gekennzeichnet, daß
bei einer bestimmten Druckanstiegsrate der Wägebehälter (1) entlüftet wird.

4. Verfahren nach einem der Ansprüche 1 bis 3,
dadurch gekennzeichnet, daß
bei einer pneumatischen Beschickung/Ausbringung des Schüttgutes mit Unter- oder überdruck zusätzlich der Druck in der Förderleitung gemessen wird und zur Festlegung des Grenzdruckwertes mit dem Druck in dem Wägebehälter (1) verglichen wird.

5. Verfahren nach Anspruch 4,
dadurch gekennzeichnet, daß
der Grenzdruckwert auf eine Druckdifferenz von Null festgelegt wird.

6. Verfahren nach einem der Ansprüche 1 bis 5,
dadurch gekennzeichnet, daß
der im Wägebehälter (1) gemessene Druck zur Steuerung eines Dosierorgans (4) und Optimierung der Schüttgut-Dosierung in der Dosiersteuerung (3') verwendet wird.

7. Verfahren nach Anspruch 6,
dadurch gekennzeichnet, daß
bei einem Überdruck im Wägebehälter (1) die Schüttgutzuführung verzögert abgeschaltet wird.

8. Verfahren nach Anspruch 6,
dadurch gekennzeichnet, daß
bei einem Unterdruck im Wägebehälter (1) die Schüttgutzuführung vorzeitig abgeschaltet wird.

9. Vorrichtung zum gravimetrischen Dosieren von Schüttgut mit einem Wägebehälter (1), der auf wenigstens eine an eine Wägeelektronik (3) angeschlossene Wägezelle (2) zur Bestimmung eines Wägesignals abgestützt ist und über flexible Verbindungen (6, 8) mit einer Schüttgutzuleitung (5) und einer Ableitung (10) verbunden ist, wobei am Wägebehälter (1) ein Drucksensor (9) vorgesehen ist,
dadurch gekennzeichnet, daß der Drucksensor (9) einen Grenzdruckwert im Wägebehälter (1) erfaßt und der Drucksensor (9) so die Wägeelektronik (3) angeschlossen ist, daß das Wägesignal der Wägezelle (2) lediglich bei Vorliegen des Grenzdruckwertes der Wägeelektronik (3) übermittelt wird.

10. Vorrichtung nach Anspruch 9,
dadurch gekennzeichnet, daß
am Wägebehälter (1) wenigstens eine mit einem Filter (12) versehene Entlüftung (11) zum Druckabbau vorgesehen ist.

11. Vorrichtung nach Anspruch 9 oder 10,
dadurch gekennzeichnet, daß
benachbart zu einer Austragvorrichtung (10) ein weiterer Drucksensor (19) zur Erfassung des Druckes an der Austragvorrichtung (10) angeordnet ist.

## Claims

1. Method of gravimetric metering of bulk material, which is fed to a weighing container (1) out of a feed container (7), is there weighed with determination of a weighing signal for passing on to weighing electronics (3) and metering control (3') and is then fed out of the weighing container (1) with the pressure in the weighing container (1) being measured,
characterized in that
the weighing signal is only transferred to the weighing electronics (3) when a limit pressure value is attained, especially atmospheric pressure.

2. Method according to claim 1, characterized in that the pressure in the weighing container (1) is measured continuously.

3. Method according to claim 1 or 2, characterized in that the weighing container (1) is vented with a predetermined increment of increase of pressure.

4. Method according to any one of claims 1 to 3, characterized in that, with pneumatic feed/discharge of the bulk material with overpressure or underpressure, the pressure in the conveyor line is additionally measured and is compared with the pressure in the weighing container (1) to determine the limit pressure value.

5. Method according to claim 4, characterized in that the limit pressure value is determined from a pressure difference from zero.

6. Method according to any one of claims 1 to 5, characterized in that the pressure measured in the weighing container (1) is used to control a metering member (4) and to optimize the metering of the bulk material in the metering control (3').

7. Method according to claim 6, characterized in that the bulk material feed is switched off with a delay when there is an excess pressure in the weighing container (1).

8. Method according to claim 6, characterized in that the bulk material feed is switched off in advance when there is an underpressure in the weighing container (1).

9. Apparatus for gravimetric metering of bulk material with a weighing container (1) which is supported on at least one weighing cell (2) connected to weighing electronics (3) to determine a weighing signal and is connected by flexible connections (6, 8) to a bulk material feed line (5) and a discharge line (10), wherein a pressure sensor (9) is provided on the weighing container (1),
characterized in that
the pressure sensor (9) detects a limit pressure value in the weighing container (1) and the pressure sensor (9) is connected to the weighing electronics (3) such that the weighing signal of the weighing cell (2) is only transferred to the weighing electronics (3) when the limit pressure value is present.

10. Apparatus according to claim 9, characterized in that at least one vent (11) comprising a filter (12) for relieving the pressure is provided on the weighing container (1).

11. Apparatus according to claim 9 or 10, characterized in that a further pressure sensor (19) is provided adjoining a discharge device (10) to detect the pressure at the discharge device (10).

## Revendications

1. Procédé pour le dosage gravimétrique d'un produit en vrac qui est transvasé d'un récipient de stockage (7) dans un récipient de pesée (1) où il est pesé en fournissant un signal de pesée destiné à être transmis à un système électronique de pesée (3) et à une commande de dosage (3'), avant d'être évacué du récipient de pesée (1), sachant que l'on mesure la pression dans le récipient de pesée (1), caractérisé en ce que le signal de pesée n'est transmis au système électronique de pesée (3) que lorsqu'une pression limite, notamment la pression atmosphérique, est atteinte.

2. Procédé selon la revendication 1, caractérisé en ce que la pression dans le récipient de pesée (1) est mesurée en continu.

3. Procédé selon la revendication 1 ou 2, caractérisé en ce qu'à un certain taux d'accroissement de la pression, le récipient de pesée (1) est ventilé.

4. Procédé selon l'une des revendications 1 à 3, caractérisé en ce que, dans le cas où le produit en vrac est chargé/déchargé par un système pneumatique avec dépression ou surpression, on mesure en outre la pression dans la conduite d'amenée et on la compare à la pression dans le récipient de pesée (1), afin de déterminer la valeur de pression limite.

5. Procédé selon la revendication 4, caractérisé en ce que la valeur de pression limite est basée sur un écart de pression de zéro.

6. Procédé selon l'une des revendications 1 à 5, caractérisé en ce que la pression mesurée dans le récipient de pesée (1) est utilisée pour commander un organe de dosage (4) et pour optimiser le dosage du produit en vrac dans la commande de dosage (3').

7. Procédé selon la revendication 6, caractérisé en ce que, dans le cas d'une surpression dans le récipient de pesée (1), l'arrivée de produit en vrac est coupée avec un retard.

8. Procédé selon la revendication 6, caractérisé en ce que, dans le cas d'une dépression dans le récipient de dosage (1), l'arrivée de produit en vrac est coupée de façon anticipée.

9. Dispositif pour le dosage gravimétrique d'un produit en vrac à l'aide d'un récipient de pesée (1) qui prend appui sur au moins une cellule de pesée (2) raccordée à un système électronique de pesée (3) et destinée à fournir un signal de pesée, et qui est relié par des liaisons flexibles (6, 8) à une conduite d'amenée de produit en vrac (5) et à une conduite d'évacuation (10), sachant qu'un capteur de pression (9) est prévu sur le récipient de pesée (1), caracténsé en ce que le capteur de pression (9) capte une valeur de pression limite dans le récipient de pesée (1) et que le capteur de pression (9) est raccordé au système électronique de pesée (3) de telle manière que le signal de pesée de la cellule de pesée (2) n'est transmis au système électronique de pesée (3) que lorsque la valeur de pression limite est atteinte.

10. Dispositif selon la revendication 9, caractérisé en ce qu'au moins une ventilation (11) munie d'un filtre (12) est prévue sur le récipient de pesée (1), afin de faire baisser la pression.

11. Dispositif selon la revendication 9 ou 10, caractérisé en ce qu'au voisinage d'un dispositif d'évacuation (10) est disposé un autre capteur de pression (19) pour capter la pression au niveau du dispositif d'évacuation (10).
